# EUROPÄISCHE PATENTSCHRIFT

(11) **EP 2 870 430 B1**
(45) Veröffentlichungstag und Bekanntmachung des Hinweises auf die Patenterteilung: **13.04.2016**
(21) Anmeldenummer: 13736484.0
(22) Anmeldetag: 08.07.2013
(51) Int. Cl.: B60W 50/10, B60H 1/00, G01C 21/36, G06F 3/01

(54) **VERFAHREN UND STEUERUNGSSYSTEM ZUM BETREIBEN EINES KRAFTWAGENS**
METHOD AND CONTROL SYSTEM FOR OPERATING A VEHICLE
MÉTHODE ET SYSTÈME DE CONTRÔLE POUR OPÉRER UN VÉHICULE

(30) Priorität: 06.07.2012 DE 102012013503
(43) Veröffentlichungstag der Anmeldung: 13.05.2015
(73) Patentinhaber: Audi AG, 85045 Ingolstadt (DE)
(72) Erfinder: EBNER, André, 85051 Ingolstadt (DE)
(74) Vertreter: Brandt, Kai
(86) Internationale Anmeldenummer: PCT/EP2013/002001
(87) Internationale Veröffentlichungsnummer: WO 2014/005722

(56) Entgegenhaltungen:
- DE-A1-102008 051 756
- US-A1- 2005 134 117
- US-A1- 2009 319 166
- US-A1- 2010 228 612
- US-A1- 2010 274 480

## Beschreibung

Die Erfindung betrifft ein Verfahren zum Betreiben eines Kraftwagens der im Oberbegriff des Patentanspruchs 1 angegebenen Art. Des Weiteren betrifft die Erfindung ein Steuerungssystem zum Betreiben eines Kraftwagens der im Oberbegriff des Patentanspruchs 8 angegebenen Art.

Ein solches Verfahren und Steuerungssystem sind aus der US 2010/0274480 A1 bekannt. Das Verfahren umfasst die folgenden Schritte: Erfassen einer auf ein Objekt gerichteten Geste eines Fahrzeuginsassens mittels einer Gestenerkennungseinheit; Interpretieren der Geste und Identifizieren des Objekts mittels einer Datenverarbeitungseinheit; Generieren eines entsprechenden Steuerbefehls in Abhängigkeit von der interpretierten Geste und des identifizierten Objekts und Ansteuern eines Assistenzsystems des Kraftwagens gemäß dem Steuerbefehl mittels der Datenverarbeitungseinheit. Das dort offenbarte System dient dazu, Gesten eines Fahrzeuginsassen zu erkennen, mittels welchen der Fahrzeuginsasse auf so genannte "Points of Interest" zeigt, wonach eine entsprechende Information über den Point of Interest an den Fahrzeuginsassen ausgegeben wird.

Die DE 10 2008 051 756 A1 offenbart ein Verfahren, bei welchem ein Fahrzeuginsasse auf einen Point of Interest auf einem Display eines Kraftwagens zeigen kann, wonach die Darstellung des Displays entsprechend angepasst wird.

US 2005/134117 A1 offenbart eine Gesten- und eine Spracherkennungseinheit, die eine auf ein Objekt gerichtete Geste und eine Spracheingabe in Kombination verarbeiten.

US 2010/228612 A1 offenbart das Zeigen auf Objekte außerhalb eines Fahrzeugs mittels eines Mobilgerätes.

US 2009/319166 A1 offenbart die Auswahl von POIs durch Zeigen auf diese mittels eines Mobilgerätes.

In dem Artikel "AIDA 2.0 - Intelligente Navigationslösung mit Augmented Reality verknüpft" (http://www.zukunft-mobilitaet.net/5086/strassenverkehr/aida2-navigation-mit-vw-audi-3d/) wird ein Steuerungssystem zum Betreiben eines Kraftwagens offenbart, welches mithilfe einer Gestenbedienung gesteuert werden kann. Auf einer 3D-Karte werden nicht nur Straßenzüge dargestellt, sondern auch Informationen in Form von "Augmented Reality" eingeblendet. So werden aus den Daten von mehr als einer Million Mobilfunkgeräten aktuelle Straßenverhältnisse abgebildet sowie 20000 Points of Interest, Bewertungen von Restaurants und Einkaufsmöglichkeiten, Informationen über lokale Veranstaltungen und dergleichen angezeigt. Darüber hinaus können mit dem dort gezeigten System auch andere Funktionen des Fahrzeugs, wie beispielsweise eine Klimaanlage, ein Radio und dergleichen, gesteuert werden. Die Steuerung erfolgt mittels Gesten bzw. mit einem Fingerzeig auf entsprechende Objekte. Schließlich zeigt die DE 10 2010 002 741 A1 ein Informationssystem für einen Kraftwagen, mittels welchem personalisierte Informationen mit einem entsprechenden Ortsbezug über in einem Umfeld des Kraftwagens befindliche Objekte bereitgestellt werden können. Beispielsweise können entsprechende Zusatzinformationen bei einer Annäherung an ein Objekt, wie beispielsweise an ein Hotel oder dergleichen, angezeigt werden.

Es ist die Aufgabe der vorliegenden Erfindung, ein Verfahren sowie ein Steuerungssystem zum Betreiben eines Kraftwagens bereitzustellen, mittels welchem eine vereinfachte und weniger fehleranfällige Bedienung eines Kraftwagens ermöglicht wird.

Diese Aufgabe wird durch ein Verfahren zum Betreiben eines Kraftwagens mit den Merkmalen des Patentanspruchs 1 und durch ein Steuerungssystem zum Betreiben eines Kraftwagens mit den Merkmalen des Patentanspruchs 10 gelöst. Vorteilhafte Ausgestaltungen mit zweckmäßigen und nicht-trivialen Weiterbildungen der Erfindung sind in den abhängigen Ansprüchen angegeben.

Ein erfindungsgemäßes Verfahren zum Betreiben eines Kraftwagens umfasst die folgenden Schritte:
- Erfassen einer auf ein Objekt gerichteten Geste eines Fahrzeuginsassen mittels einer Gestenerkennungseinheit;
- Interpretieren der Geste und Identifizieren des Objekts mittels einer Datenverarbeitungseinheit;
- Generieren eines entsprechenden Steuerbefehls in Abhängigkeit von der interpretierten Geste und dem identifizierten Objekt und Ansteuern eines Assistenzsystems des Kraftwagens gemäß dem Steuerbefehl mittels der Datenverarbeitungseinheit;
wobei sich das erfindungsgemäße Verfahren durch folgende Schritte auszeichnet:
- Erfassen eines vor, während oder nach dem Erfassen der Geste geäußerten Sprachbefehls des Fahrzeuginsassen mittels einer Spracherkennungseinheit;
- kombiniertes Interpretieren der Geste, des identifizierten Objekts und des Sprachbefehls sowie Generieren des Steuerbefehls in Abhängigkeit von der kombinierten Interpretation mittels der Datenverarbeitungseinheit.

Mit anderen Worten ist es also erfindungsgemäß vorgesehen, eine kombinierte Gesten- und Sprachsteuerung vorzusehen, mittels welchen der Kraftwagen bzw. entsprechende Funktionen des Kraftwagens gesteuert werden können. Der Fahrzeuginsasse kann beispielsweise auf entsprechende Objekte, mit welchen er interagieren möchte, zeigen und im Wesentlichen gleichzeitig einen entsprechenden Sprachbefehl tätigen, aus welchem hervorgeht, in welcher Form er mit dem entsprechenden Objekt er interagieren möchte. Bei diesen Objekten kann es sich beispielsweise um so genannte Points of Interest handeln, welche sich beispielsweise entlang einer bestimmten Route befinden, die mit dem Kraftwagen befahren wird. Ebenso kann es sich bei den Objekten aber auch um Bedienelemente, wie beispielsweise ein Klimaanlagenbedienelement, eine Navigationseinrichtung innerhalb des Kraftwagens oder dergleichen handeln, mit welchen der Fahrzeuginsasse durch einen entsprechenden Fingerzeig oder eine andere Geste in Kombination mit einem entsprechenden Sprachbefehl interagieren kann.

Die Bedienung des Kraftwagens bzw. entsprechender Assistenzsysteme des Kraftwagens wird durch die kombinierte Gestik- und Sprachbedienung wesentlich intuitiver und damit vereinfacht. Des Weiteren werden Fehlinterpretationen von Wünschen des Fahrzeuginsassen bezüglich einer Interaktion mit den Objekten erheblich verringert, da eine kombinierte Interpretation entsprechender Gesten des Fahrzeuginsassen und seiner Sprachbefehle erfolgt.

Gemäß der Erfindung ist es vorgesehen, dass sowohl bei einer auf ein außerhalb des Kraftwagens angeordnetes Objekt als auch bei einer auf ein innerhalb des Kraftwagens angeordnetes Objekt gerichteten Geste diese erfasst und interpretiert sowie das Objekt identifiziert wird. Die kombinierte Gesten- und Sprachbedienung kann mit anderen Worten also sowohl auf Objekte innerhalb als auch außerhalb des Fahrzeugs angewendet werden.

Die Erfindung sieht vor, dass als Geste eine Fingerbewegung des Fahrzeuginsassen erfasst wird, mittels welcher auf das Objekt gezeigt wird. In einer nicht zur Erfindung gehörenden Variante können auch weitere Gesten des Fahrzeuginsassen erfasst werden, welche beispielsweise mit einer Datenbank abgeglichen werden können, in welcher jeweilige Bedeutungen entsprechender Gesten abgelegt sind, sodass eine noch intuitivere Bedienung des Kraftwagens bzw. von dessen Assistenzsystems ermöglicht wird.

In weiterer vorteilhafter Ausgestaltung der Erfindung ist es vorgesehen, dass zum Identifizieren des Objekts eine Kraftwagenposition sowie eine Kraftwagenorientierung ermittelt und anschließend das Objekt durch einen Vergleich mit digitalen Karteninformationen identifiziert wird. Dadurch kann auf besonders einfache Weise eine Identifikation entsprechender Objekte vorgenommen werden, da bei Kenntnis der Kraftwagenposition in Kombination mit der Kenntnis der Kraftwagenorientierung eine entsprechend einfache Zuordnung zu entsprechenden digitalen Karteninformationen erfolgen kann, sodass keine weitere aufwändige Sensorik zur Identifizierung entsprechender Objekte, insbesondere von außerhalb des Kraftwagens angeordneten Objekten, erforderlich ist.

Vorzugsweise erfolgt eine kombinierte Gesten- und Sprachbefehlerkennung mit anschließender Generierung des Steuerbefehls nur dann, falls die Geste und der Sprachbefehl innerhalb einer vorgegebenen Dauer erfasst werden. Dadurch wird gewährleistet, dass ein entsprechender Steuerbefehl ausschließlich nach einer kombinierten Auswertung einer Geste und eines entsprechenden Sprachbefehls erfolgt, sodass eine Interpretation eines Wunsches eines Fahrzeuginsassen auf besonders zuverlässige Art und Weise erfolgen kann. Mit anderen Worten wird einer Missinterpretation des Wunsches des Fahrzeuginsassen bezüglich einer Interaktion mit einem entsprechenden Objekt zuverlässig vorgebeugt.

In weiterer vorteilhafter Ausgestaltung der Erfindung ist es vorgesehen, dass eine auf einen weiteren Kraftwagen gerichtete Geste erfasst und identifiziert sowie in Kombination mit einem interpretierten Sprachbefehl, mittels welchem eine Herstellung einer Kommunikationsverbindung mit einer Kommunikationseinrichtung des weiteren Kraftwagens gefordert wird, eine Kommunikationseinrichtung des Assistenzsystems mit einem entsprechenden Steuerbefehl zum Herstellen der Kommunikationsverbindung angesteuert wird. Bei der Kommunikationsverbindung kann es sich beispielsweise um eine Chatfunktion, ein Telefonat oder dergleichen handeln. Somit kann auf besonders einfache Weise eine Kommunikationsverbindung zu einem weiteren Kraftwagen aus der Umgebung hergestellt werden, ohne dass der Fahrzeuginsasse beispielsweise eine Nummer wählen muss.

Gemäß einer weiteren vorteilhaften Ausführungsform der Erfindung ist es vorgesehen, dass eine auf ein außerhalb des Kraftwagens angeordnetes Objekt gerichtete Geste erfasst und interpretiert sowie in Kombination mit einem als Informationsanfrage interpretierten Sprachbefehl eine Navigationseinheit des Assistenzsystems mit einem Steuerbefehl zum Bereitstellen einer Information über das Objekt angesteuert wird. Bei diesem Objekt kann es sich um einen so genannten Point of Interest handeln, beispielsweise in Form eines Hotels, eines Restaurants oder dergleichen, sodass durch eine kombinierte Auswertung einer Geste und eines Sprachkommandos des Fahrzeuginsassen eine entsprechende Information dem Fahrzeuginsassen bereitgestellt werden kann.

Bei einer weiteren vorteilhaften Ausführungsform der Erfindung ist es vorgesehen, dass eine auf ein außerhalb des Kraftwagens angeordnetes Objekt gerichtete Geste erfasst und interpretiert sowie in Kombination mit einem als Navigationsbefehl identifizierten Sprachbefehl eine Navigationseinheit des Assistenzsystems mit einem entsprechenden Steuerbefehl zum Ermitteln einer Route zu dem Objekt angesteuert wird. Aufwändige Eingaben an einer Navigationseinheit zum Bestimmen einer entsprechenden Route zu dem gewünschten Objekt können somit entfallen, sodass entsprechende Navigationsfunktionen auf besonders einfache Art und Weise durch den Fahrzeuginsassen angefordert und bereitgestellt werden können.

In weiterer vorteilhafter Ausgestaltung der Erfindung ist es vorgesehen, dass ein außerhalb des Kraftwagens angeordnetes Objekt in einem kontaktanalogen Head-Up-Display des Kraftwagens hervorgehoben wird, sobald eine auf dieses Objekt gerichtete Geste erkannt wurde. Dadurch wird eine besonders einfache Interaktion des Fahrzeuginsassen mit entsprechenden Objekten im Umfeld des Kraftwagens ermöglicht. Gleichzeitig wird dem Fahrzeuginsassen unmittelbar visualisiert, welches Objekt er mit seiner Geste angewählt hat, sodass im Falle einer Fehlinterpretation der Geste dieser Fehler für den Fahrzeuginsassen direkt erkennbar ist.

Ein erfindungsgemäßes Steuerungssystem zum Betreiben eines Kraftwagens umfasst eine Gestenerkennungseinheit, welche dazu ausgelegt ist, eine auf ein Objekt gerichtete Geste eines Fahrzeuginsassen zu erkennen; eine Datenverarbeitungseinheit, welche dazu ausgelegt ist, die erfasste Geste zu interpretieren, das Objekt zu identifizieren und wenigstens einen Steuerbefehl in Abhängigkeit von der interpretierten Geste und des identifizierten Objekts zu generieren, sowie ein Assistenzsystem des Kraftwagens gemäß dem Steuerbefehl anzusteuern, wobei sich das erfindungsgemäße Steuerungssystem dadurch auszeichnet, dass das Steuerungssystem eine Spracherkennungseinheit umfasst, welche dazu ausgelegt ist, einen vor, während oder nach dem Erfassen der Geste geäußerten Sprachbefehl des Fahrzeuginsassen zu erfassen, und dass die Datenverarbeitungseinheit dazu ausgelegt ist, die Geste und den Sprachbefehl in Kombination zu interpretieren und den Steuerbefehl in Abhängigkeit von der kombinierten Interpretation der Geste und des Sprachbefehls zu generieren. Vorteilhafte Ausführungen des erfindungsgemäßen Verfahrens sind als vorteilhafte Ausführungen des Steuerungssystems anzusehen, wobei hier insbesondere das Steuerungssystem Mittel umfasst, mit welchen die Verfahrensschritte durchführbar sind.

Eine vorteilhafte Ausführungsform des Steuerungssystems zeichnet sich dadurch aus, dass die Gestenerkennungseinheit dazu ausgelegt ist, ausschließlich einen vorgebbaren Innenraumbereich des Kraftwagens zu überwachen und die Gesten des Fahrzeuginsassen welcher in diesem Innenraumbereich angeordnet ist, zu erfassen. Mit anderen Worten ist es vorgesehen, dass ausschließlich die Gesten eines bestimmten Fahrzeuginsassen erfasst und in Kombination mit dessen Sprachbefehlen zu entsprechenden Steuerungsbefehlen umgesetzt werden. Dadurch wird gewährleistet, dass nicht eine Mehrzahl von Fahrzeuginsassen gleichzeitig beispielsweise unterschiedliche Gesten und entsprechende Sprachbefehle ausgeben können, welche zu widersprüchlichen Steuerungsbefehlen oder unterschiedlichen Steuerungsbefehlen führen würden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Ausführungsbeispiele der Erfindung werden nachfolgend anhand schematischer Zeichnungen näher erläutert.

Es zeigen:
- Fig. 1: eine schematische Darstellung eines Kraftwagens mit einem Steuerungssystem zum Betreiben des Kraftwagens, einem kontaktanalogen Head-Up-Display, einem Objekt innerhalb des Kraftwagens sowie einem innerhalb eines Innenraumbereichs des Kraftwagens angeordneten Fahrzeuginsassen; und in
- Fig. 2: eine schematische Darstellung des in Fig. 1 gezeigten Kraftwagens und eines weiteren Kraftwagens sowie ein außerhalb des in Fig. 1 gezeigten Kraftwagens angeordnetes Objekt.

In den Figuren sind gleiche oder funktionsgleiche Elemente mit gleichen Bezugszeichen versehen.

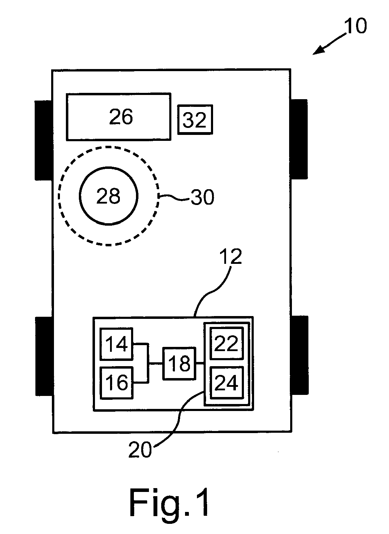

Eine schematische Darstellung eines Kraftwagens 10 ist in Fig. 1 gezeigt. Der Kraftwagen 10 umfasst ein Steuerungssystem 12 mit einer Gestenerkennungseinheit 14, einer Spracherkennungseinheit 16, einer Datenverarbeitungseinheit 18 und einem Assistenzsystem 20, welches eine Navigationseinheit 22 und eine Kommunikationseinrichtung 24 umfasst. Ferner umfasst der Kraftwagen 10 ein kontaktanaloges Head-Up-Display 26, mittels welchem beispielsweise Projektionen im Bereich einer hier nicht dargestellten Windschutzscheibe des Kraftwagens 10 einem Fahrzeuginsassen 28, welcher innerhalb eines Innenraumbereichs 30 des Kraftwagens 10 sitzt, bereitgestellt werden können. Schließlich umfasst der Kraftwagen 10 noch ein Objekt 32, welches im Innenraum des Kraftwagens 10 angeordnet ist. Bei dem Objekt 32 kann es sich beispielsweise um ein Bedienelement, eine Klimaautomatik, ein Display oder dergleichen handeln. Das Objekt 32 kann dabei ebenfalls Teil des Assistenzsystems 20 sein, sodass das Objekt 32 mittels entsprechender Steuerbefehle durch die Datenverarbeitungsreinrichtung 18 angesteuert werden kann.

Die Gestenerkennungseinheit 14 ist dazu ausgelegt, eine auf das Objekt 32 oder auf ein weiteres, hier nicht näher bezeichnetes Objekt innerhalb des Kraftwagens 10 oder außerhalb des Kraftwagens 10 gerichtete Geste des Fahrzeuginsassen 28 zu erkennen. Ferner ist die Gestenerkennungseinheit 14 dazu ausgelegt, ausschließlich den Innenraumbereich 30 des Kraftwagens 10 zu überwachen und die Gesten des Fahrzeuginsassen 28, welcher in diesem Innenraumbereich 30 angeordnet ist, zu erfassen. Der zu überwachende Innenraumbereich 30 kann dabei beispielsweise einen Bereich rund um einen Fahrersitz des Kraftwagens oder andere Sitze innerhalb des Kraftwagens 10 umfassen. Zur Erkennung entsprechender Gesten des Fahrzeuginsassen 28 kann die Gestenerkennungseinheit 14 beispielsweise eine hier nicht gezeigte Kamera aufweisen, mittels welcher entsprechende Bewegungen bzw. Gesten des Fahrzeuginsassen 28 erfasst werden können. Bei den Gesten des Fahrzeuginsassen 28, welche auf entsprechende Objekte 32 oder weitere Objekte gerichtet sind, kann es sich beispielsweise um einen Fingerzeig, oder in einer nicht zur Erfindung gehörenden Variante um eine andere Handbewegung oder dergleichen handeln, welche mittels der Gestenerkennungseinheit 14 erfasst werden.

Die Spracherkennungseinheit 16 ist dazu ausgelegt, einen vor, während oder nach dem Erfassen der Geste geäußerten Sprachbefehl des Fahrzeuginsassen 28 zu erfassen. Dazu kann die Spracherkennungseinheit 16 beispielsweise ein separates, hier nicht gezeigtes separates Mikrofon oder auch beispielsweise ein bereits in dem Kraftwagen 10 installiertes Mikrofon einer Freisprechanlage des Kraftwagens 10 nutzen. Mittels der Spracherkennungseinheit 16 können dabei auch Sprachbefehle weiterer, hier nicht gezeigter Fahrzeuginsassen des Kraftwagens 10 erfasst werden.

Die Gestenerkennungseinheit 14 und die Spracherkennungseinheit 16 sind mit der Datenverarbeitungseinheit 18 verbunden, sodass die entsprechend erfassten Gesten bzw. Sprachbefehle an die Datenverarbeitungseinheit 18 weitergeleitet werden können. Die Datenverarbeitungseinheit 18 ist dazu ausgelegt, die erfasste Geste zu interpretieren, das Objekt 32 oder weitere Objekte, auf welche mittels der Geste gezeigt wurde, zu identifizieren sowie entsprechende Sprachbefehle des Fahrzeuginsassen 28 zu interpretieren. Des Weiteren ist die Datenverarbeitungseinheit 18 dazu ausgelegt, die Geste, das identifizierte Objekt und den Sprachbefehl in Kombination zu interpretieren und einen entsprechenden Steuerbefehl in Abhängigkeit von der kombinierten Interpretation zu generieren und das Assistenzsystem 20 gemäß dem Steuerbefehl anzusteuern. Nachfolgend wird ein Verfahren zum Betreiben des Kraftwagens 10 mithilfe des Steuerungssystems 12 erläutert.

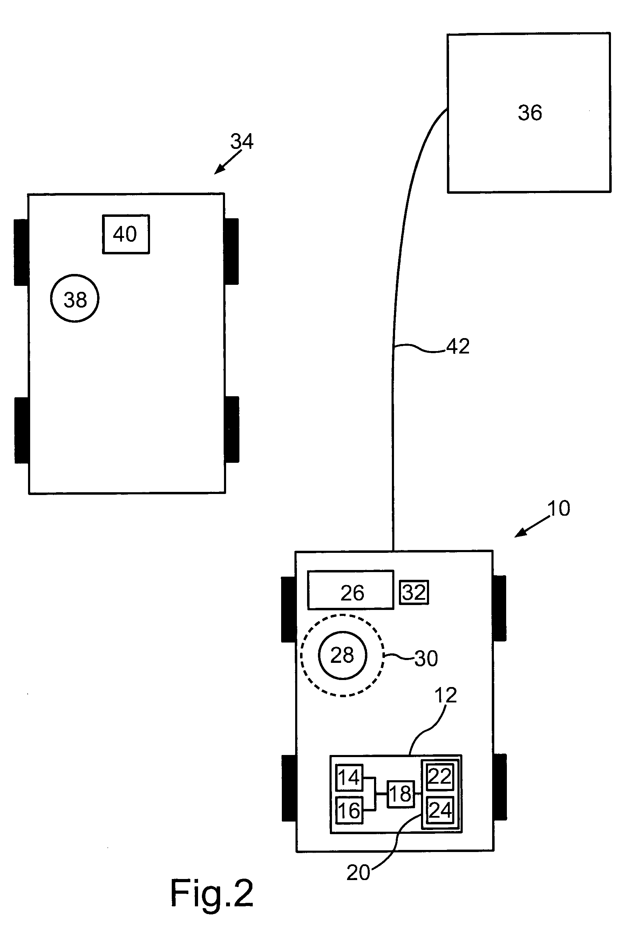

In Fig. 2 sind in ein einer schematischen Ansicht der Kraftwagen 10, ein weiterer Kraftwagen 34 und ein weiteres Objekt 36 gezeigt. Bei dem Objekt 36 kann es sich beispielsweise um einen so genannten Point of Interest in Form eines Hotels, eines Restaurants oder dergleichen handeln. Zunächst wünscht der Fahrzeuginsasse 28 eine Interaktion mit dem Objekt 32 innerhalb des Kraftwagens 10. Im vorliegenden Fall handelt es sich bei dem Objekt 32 um ein Klimaautomatikbedienteil, wobei der Fahrzeuginsasse 28 eine Erhöhung der Raumtemperatur innerhalb des Kraftwagens 10 wünscht. Zunächst zeigt der Fahrzeuginsasse 28 mit seinem Zeigefinger auf das Objekt 32 und gibt einen Sprachbefehl "Innenraumtemperatur um 2°C erhöhen" aus.

Die Gestenerkennungseinheit 14 erkennt diesen Fingerzeig auf das Objekt 32 und die Spracherkennungseinheit 16 erfasst gleichzeitig den vom Fahrzeuginsassen 28 ausgegebenen Sprachbefehl. Diese Informationen werden an die Datenverarbeitungseinheit 18 weitergeleitet, welche zum einen den Fingerzeig des Fahrzeuginsassen 28 auf das Objekt 32 interpretiert und anhand dessen das Objekt 32, im vorliegenden Fall also das Klimaautomatikbedienteil, identifiziert. Des Weiteren interpretiert die Datenverarbeitungseinheit 18 den Sprachbefehl des Fahrzeuginsassen 28, wodurch die Datenverarbeitungseinheit 18 erkennt, dass die Innenraumtemperatur innerhalb des Kraftwagens 10 um 2°C erhöht werden soll. Mit anderen Worten erfolgt also ein kombiniertes Interpretieren der Geste, des identifizierten Objekts 32 und des Sprachbefehls durch die Datenverarbeitungseinheit 18, wonach ein entsprechender Steuerbefehl in Abhängigkeit von der kombinierten Interpretation mittels der Datenverarbeitungseinheit 18 generiert wird.

Die Datenverarbeitungseinheit 18 steuert anschließend das Objekt 32 mit dem Steuerbefehl entsprechend an. Infolgedessen wird schließlich die Raumtemperatur innerhalb des Kraftwagens 10 um die gewünschten 2°C erhöht bzw. eine hier nicht näher bezeichnete Klimaautomatik des Kraftwagens 10 derart angesteuert, dass die Raumtemperatur innerhalb des Kraftwagens 10 wie gewünscht erhöht wird. Bei dem Objekt 32 kann es sich dabei im Wesentlichen um beliebige Objekte innerhalb des Kraftwagens 10 handeln, mit welchen eine Interaktion zwischen dem Fahrzeuginsassen 28 zum Betreiben bzw. Bedienen des Kraftwagens 10 bzw. dessen Funktionen möglich ist.

Der Fahrzeuginsasse 28 kann zudem auch wünschen, eine Kommunikationsverbindung mit dem weiteren Kraftwagen 34 bzw. einem Fahrzeuginsassen 38, welcher den Kraftwagen 34 fährt, herzustellen. Mit anderen Worten soll eine Kommunikationsverbindung zwischen der Kommunikationseinrichtung 24 des Kraftwagens 10 und einer Kommunikationseinrichtung 40 des weiteren Kraftwagens 34 hergestellt werden. Der Fahrzeuginsasse 28 zeigt dazu auf das vorausfahrende Fahrzeug 34 und gibt kurz davor, gleichzeitig oder kurz danach einen entsprechenden Sprachbefehl, beispielsweise "Telefonverbindung mit diesem Kraftwagen herstellen" aus.

Die Gestenerkennungseinheit 14 erfasst zunächst die Geste des Fahrzeuginsassens 28, welche auf den Kraftwagen 34 gerichtet ist. Um überhaupt erkennen zu können, dass der Fahrzeuginsasse 28 auf den Kraftwagen 34 gezeigt hat, wird nach Erkennen der Geste zunächst eine Kraftwagenposition sowie eine Kraftwagenorientierung ermittelt. Dies kann beispielsweise unter Zuhilfenahme der Navigationseinheit 22 erfolgen, mittels welcher entsprechende GPS-Informationen bereitgestellt werden. Des Weiteren kann der Kraftwagen 10 beispielsweise einen Kompass oder dergleichen umfassen, mittels welchem die Orientierung des Kraftwagens 10 ermittelt werden kann. Darüber hinaus können auch Odometriedaten, wie beispielsweise zurückgelegte Wegstrecken und/oder Beschleunigungen des Kraftwagens 10 zur Positionsermittlung herangezogen werden.

Um zu erkennen, dass es sich um den Kraftwagen 34 handelt, kann das Steuerungssystem 12 bzw. die Gestenerkennungseinheit 14 mit einer hier nicht gezeigten Kamera oder mehreren Kameras, welche am Kraftwagen 10 angebracht sind, verbunden sein, mittels welcher oder mittels welchen erkannt wird, dass der Fahrzeuginsasse 28 soeben auf den weiteren Kraftwagen 34 gezeigt hat. Die Datenverarbeitungseinheit 18 wertet nun die erkannte Geste, den Sprachbefehl und die Identifikation des weiteren Kraftwagens 34 aus, wonach ein entsprechender Steuerbefehl zum Herstellen einer Kommunikationsverbindung zwischen der Kommunikationseinrichtung 24 des Kraftwagens 10 und der Kommunikationseinrichtung 40 des weiteren Kraftwagens 34 generiert wird. Anschließend kann der Fahrzeuginsasse 28 mit dem Fahrzeuginsassen 38 kommunizieren.

Das Steuerungssystem 12 kann auch dazu genutzt werden, Informationen über entsprechende Objekte außerhalb des Kraftwagens 10, im vorliegenden Fall über das Objekt 36, auszugeben. Vorliegend handelt es sich bei dem Objekt 36 um ein Hotel, welches sich im Sichtbereich des Fahrzeuginsassen 28 befindet. Der Fahrzeuginsasse 28 zeigt auf das Objekt 36 und gibt gleichzeitig einen Sprachbefehl aus: "Wie teuer ist das Zimmer in diesem Hotel?".

Zum Identifizieren des Objekts 36 wird wiederum die Kraftwagenposition sowie die Kraftwagenorientierung ermittelt und anschließend wird das Objekt 36 durch einen Vergleich mit einem Umfeldmodell, beispielsweise durch einen Vergleich mit digitalen Karteninformationen, identifiziert. Die Datenverarbeitungseinheit 18 wertet wiederum die Geste, das identifizierte Objekt 36 und den entsprechenden Sprachbefehl aus, wonach die Datenverarbeitungseinheit 18 einen entsprechenden Steuerbefehl an die Navigationseinheit 22 ausgibt, welche daraufhin die gewünschte Preisinformation an den Fahrzeuginsassen 28 ausgibt. Alternativ kann der entsprechende Steuerbefehl auch an die Kommunikationseinrichtung 24 ausgegeben werden, welche beispielsweise eine Internetverbindung aufbaut, um die entsprechenden Informationen zu suchen und dem Fahrzeuginsassen 28 zur Verfügung zu stellen.

Darüber hinaus ist es auch möglich, dass der Fahrzeuginsasse 28 eine Navigation zu dem Objekt 36 wünscht. In Kombination mit einem entsprechenden Fingerzeig oder einer anderen Geste auf das Objekt 36 und einem Sprachbefehl in Form eines Navigationsbefehls werden diese Informationen durch das Steuerungssystem 12 wiederum in Kombination ausgewertet, sodass die Datenverarbeitungseinheit 18 einen entsprechenden Steuerbefehl an die Navigationseinheit 22 weiterleitet, um diese entsprechend anzusteuern, sodass die Navigationseinheit 22 eine Route 42 zu dem Objekt 36 berechnet, entlang welcher der Fahrzeuginsasse 28 bis zum Erreichen des Objekts 36 navigiert wird.

Zur Vereinfachung der Bedienung des Steuerungssystems 12 können dabei außerhalb des Kraftwagens 10 angeordnete Objekte 36 oder weitere Objekte in dem kontaktanalogen Head-Up-Display 26 hervorgehoben werden, sobald eine auf dieses Objekt 36 gerichtete Geste erkannt wurde. Dadurch erhält der Fahrzeuginsasse 28 eine entsprechende Unterstützung, sodass Interaktionen zwischen dem Fahrzeuginsassen 28 und solchen Objekten 36 zusätzlich erleichtert werden.

Des Weiteren erfolgt die kombinierte Gesten- und Sprachbefehlerkennung mit der anschließenden Generierung des Steuerbefehls nur dann, falls die Geste und der Sprachbefehl innerhalb einer vorgegebenen Dauer erfasst werden. Mit anderen Worten kann es vorgesehen sein, dass das Steuerungssystem 12 nur dann entsprechende Steuerbefehle generiert, wenn eine entsprechende Geste und ein entsprechender Sprachbefehl des Fahrzeuginsassen 28 innerhalb eines vorgegebenen Zeitfensters erfolgen. Dadurch wird die Interpretation von Wünschen des Fahrzeuginsassen 28 verbessert, da immer eine kombinierte Auswertung von Gesten und Sprachbefehlen erfolgt.

Insgesamt wird mithilfe des Steuerungssystems 12 eine besonders einfache und intuitive Interaktion zwischen dem Fahrzeuginsassen 28 und entsprechenden Objekten 32 bzw. 36 möglich, sodass ein Fahrzeuginsasse 28 eine Vielfalt von Funktionalitäten des Kraftwagens 10 auf besonders einfache Weise nutzen kann, ohne dass er zu sehr von seinen eigentlichen Fahraufgaben abgelenkt wird. Neben einer vereinfachten Bedienung des Kraftwagens 10 wird dadurch zusätzlich die Sicherheit beim Führen des Kraftwagens 10 im Straßenverkehr erheblich verbessert.

## Patentansprüche

1. Verfahren zum Betreiben eines Kraftwagens (10), mit den Schritten:
- Erfassen einer auf ein Objekt (32, 36) gerichteten Geste eines Fahrzeuginsassen (28) mittels einer Gestenerkennungseinheit (14);
- Interpretieren der Geste und Identifizieren des Objekts (32, 36) mittels einer Datenverarbeitungseinheit (18);
- Generieren eines entsprechenden Steuerbefehls in Abhängigkeit von der interpretierten Geste und dem identifizierten Objekt (32, 36) und Ansteuern eines Assistenzsystems (20) des Kraftwagens (20) gemäß dem Steuerbefehl mittels der Datenverarbeitungseinheit (18);
- Erfassen eines vor, während oder nach dem Erfassen der Geste geäußerten Sprachbefehls des Fahrzeuginsassen (28) mittels einer Spracherkennungseinheit (16);
- kombiniertes Interpretieren der Geste, des identifizierten Objekts (32, 36) und des Sprachbefehls sowie Generieren des Steuerbefehls in Abhängigkeit von der kombinierten Interpretation mittels der Datenverarbeitungseinheit (18);
**dadurch gekennzeichnet, dass**
- sowohl bei einer auf ein außerhalb des Kraftwagens angeordnetes Objekt (36) als auch bei einer auf ein innerhalb des Kraftwagens angeordnetes Objekt (32) gerichteten Geste diese erfasst und interpretiert sowie das Objekt (32, 36) identifiziert wird;
- als Geste eine Fingerbewegung des Fahrzeuginsassen (28) erfasst wird, mittels welcher auf das Objekt (32, 36) gezeigt wird.

2. Verfahren nach Anspruch 1,
**dadurch gekennzeichnet, dass**
zum Identifizieren des Objekts (32, 36) eine Kraftwagenposition sowie eine Kraftwagenorientierung ermittelt und anschließend das Objekt (32, 36) durch einen Vergleich mit digitalen Karteninformationen identifiziert wird.

3. Verfahren nach Anspruch 1 oder 2,
**dadurch gekennzeichnet, dass**
eine kombinierte Gesten- und Sprachbefehlerkennung mit anschließender Generierung des Steuerbefehls nur erfolgt, falls die Geste und der Sprachbefehl innerhalb einer vorgegebenen Dauer erfasst werden.

4. Verfahren nach einem der vorhergehenden Ansprüche,
**dadurch gekennzeichnet, dass**
eine auf einen weiteren Kraftwagen (34) gerichtete Geste erfasst und identifiziert sowie in Kombination mit einem interpretierten Sprachbefehl, mittels welchem eine Herstellung einer Kommunikationsverbindung mit einer Kommunikationseinrichtung (40) des weiteren Kraftwagens (34) gefordert wird, eine Kommunikationseinrichtung (24) des Assistenzsystems (20) mit einem entsprechenden Steuerbefehl zum Herstellen der Kommunikationsverbindung angesteuert wird.

5. Verfahren nach einem der Ansprüche 1 bis 4,
**dadurch gekennzeichnet, dass**
eine auf ein außerhalb des Kraftwagens angeordnetes Objekt (36) gerichtete Geste erfasst und interpretiert sowie in Kombination mit einem als Informationsanfrage interpretierten Sprachbefehl eine Navigationseinheit (22) des Assistenzsystems (20) mit einem entsprechenden Steuerbefehl zum Bereitstellen einer Information über das Objekt (36) angesteuert wird.

6. Verfahren nach einem der Ansprüche 1 bis 4,
**dadurch gekennzeichnet, dass**
eine auf ein außerhalb des Kraftwagens (10) angeordnetes Objekt (36) gerichtete Geste erfasst und interpretiert sowie in Kombination mit einem als Navigationsbefehl identifizierten Sprachbefehl eine Navigationseinheit (22) des Assistenzsystems (20) mit einem entsprechenden Steuerbefehl zum Ermitteln einer Route (42) zu dem Objekt (36) angesteuert wird.

7. Verfahren nach einem der vorhergehenden Ansprüche,
**dadurch gekennzeichnet, dass**
ein außerhalb des Kraftwagens (10) angeordnetes Objekt (36) in einem kontaktanalogen Head-Up-Display (26) des Kraftwagens (10) hervorgehoben wird, sobald eine auf dieses Objekt (36) gerichtete Geste erkannt worden ist.

8. Steuerungssystem (12) zum Betreiben eines Kraftwagens (10), mit:
- einer Gestenerkennungseinheit (14), welche dazu ausgelegt ist, eine auf ein Objekt (32, 36) gerichtete Geste eines Fahrzeuginsassen (28) zu erkennen;
- einer Datenverarbeitungseinheit (18), welche dazu ausgelegt ist, die erfasste Geste zu interpretieren, das Objekt (32, 36) zu identifizieren und wenigstens einen Steuerbefehl in Abhängigkeit von der interpretierten Geste und dem identifizierten Objekt zu generieren sowie ein Assistenzsystem (20) des Kraftwagens (10) gemäß dem Steuerbefehl anzusteuern;
- das Steuerungssystem (12) eine Spracherkennungseinheit (16) umfasst, welche dazu ausgelegt ist, einen vor, während oder nach dem Erfassen der Geste geäußerten Sprachbefehl des Fahrzeuginsassen (28) zu erfassen;
- die Datenverarbeitungseinheit (18) dazu ausgelegt ist, die Geste, das identifizierte Objekt (32, 36) und den Sprachbefehl in Kombination zu interpretieren und den Steuerbefehl in Abhängigkeit von der kombinierten Interpretation zu generieren;
**dadurch gekennzeichnet, dass**
- die Gestenerkennungseinheit (14) dazu ausgelegt ist, sowohl bei einer auf ein außerhalb des Kraftwagens angeordnetes Objekt (36) als auch bei einer auf ein innerhalb des Kraftwagens angeordnetes Objekt (32) gerichteten Geste diese zu erfassen, wobei die Datenverarbeitungseinheit (18) dazu ausgelegt ist, die Geste zu interpretieren sowie das Objekt (36) zu identifizieren;
- die Gestenerkennungseinheit (14) dazu ausgelegt ist, als Geste eine Fingerbewegung des Fahrzeuginsassen (28) zu erfassen, mittels welcher auf das Objekt (32, 36) gezeigt wird.

9. Steuerungssystem (12) nach Anspruch 8,
**dadurch gekennzeichnet, dass**
die Gestenerkennungseinheit (14) dazu ausgelegt ist, ausschließlich einen vorgebbaren Innenraumbereich (30) des Kraftwagens (10) zu überwachen und die Gesten des Fahrzeuginsassen (28), welcher in diesem Innenraumbereich (30) angeordnet ist, zu erfassen.

## Claims

1. Method of operating a motor vehicle (10) with the stages:
- recording of a gesture of a vehicle occupant (28) directed at an object (32, 36) by means of a gesture recognition unit (14);
- interpretation of the gesture and identification of the object (32, 36) by means of a data processing unit (18);
- generation of a corresponding control command as a function of the interpreted gesture and the identified object (32, 36) and activation of an assistance system (20) of the motor vehicle (20) in accordance with the control command by means of the data processing unit (18);
- recording of a spoken command by the vehicle occupant (28), expressed before, during or after the recording of the gesture, by means of a speech recognition unit (16);
- combined interpretation of the gesture, the identified object (32, 36) and the spoken command as well as generation of the control command as a function of the combined interpretation by means of the data processing unit (18);
**characterised in that**
- both in the case of a gesture directed at an object (36) located outside the vehicle and in the case of a gesture directed at an object (32) located inside the vehicle this is recorded and interpreted as well as the object (32, 36) being identified;
- a movement of a finger by the vehicle occupant (28) by means of which the object (32, 36) is being pointed to is recorded as a gesture.

2. Method according to claim 1
**characterised in that**
to identify the object (32, 36) a motor vehicle position as well as a motor vehicle orientation are determined and the object (32, 36) is determined by way of a comparison with digital mapping information.

3. Method according to claim 1 or 2
**characterised in that**
combined gesture and spoken command recognition with subsequent generation of a control command only takes place if the gesture and the spoken command are recorded within a predetermined duration.

4. Method according to any one of the preceding claims,
**characterised in that**
a gesture directed at another motor vehicle (34) is recorded and identified, and in combination with an interpreted spoken command, by means of which establishment of a communication link with a communication unit (40) of the other motor vehicle (34) is requested, a communication unit (24) of the assistance system (20) is activated with a corresponding control command to establish the communication link.

5. Method according to any one of claims 1 to 4
**characterised in that**
a gesture directed at an object (36) located outside the motor vehicle is recorded and interpreted and in combination with a spoken command, interpreted as an information request, a navigation unit (22) of the assistance system (20) is activated with a corresponding control command to provide information about the object (36).

6. Method according to any one of claims 1 to 4
**characterised in that**
a gesture directed at an object (36) located outside the motor vehicle (10) is recorded and interpreted and in combination with a spoken command, interpreted as a navigation command request, a navigation unit (22) of the assistance system (20) is activated with a corresponding control command to determine a route (42) to the object (36).

7. Method according to any of the preceding claims
**characterised in that**
an object (36) located outside the motor vehicle (10) is highlighted in a contact-analogue head-up display (26) of the motor vehicle (10) as soon as a gesture directed at this object (36) has been recognised.

8. Control system (12) for operating a motor vehicle (10) with:
- a gesture recognition unit (14) designed for recording a gesture of a vehicle occupant (28) directed at an object (32, 36);
- a data processing unit (18) designed for interpreting the recorded gesture, identifying the object (32, 36) and generating at least one control command as a function of the interpreted gesture and the identified object, as well as for activating an assistance system (20) of the motor vehicle (10) in accordance with the control command;
- the control system (12) comprises a speech recognition unit (16) which is designed for recording a spoken command of the vehicle occupant (28) expressed for, during or after recording of the gesture;
- the data processing unit (18) is designed to interpret the gesture, the identified object (32, 36) and the spoken command in combination with each other and to generate the control command as a function of the combined interpretation;
**characterised in that**
- the gesture recognition unit (14) is designed to record a gesture directed both at an object (36) located outside the motor vehicle and a gesture directed at an object (32) located inside the motor vehicle, wherein the data processing unit (18) is designed to interpret the gesture as well as to identify the object (36)
- the gesture recognition unit (14) is designed to record as a gesture a movement of a finger of the vehicle occupant (28) with which the object (32, 36) is being pointed to.

9. Control system (12) according to claim 8,
**characterised in that**
the gesture recognition unit (14) is designed to monitor solely a pre-determinable area of the interior (30) of the vehicle (10) and to record the gestures of the vehicle occupant (28) located in this area of the interior (30).

## Revendications

1. Procédé de fonctionnement d'un véhicule automobile (10), avec les étapes :
- détection d'un geste, dirigé vers un objet (32, 36), d'un occupant (28) du véhicule au moyen d'une unité de détection de geste (14) ;
- interprétation du geste et identification de l'objet (32, 36) au moyen d'une unité de traitement de données (18) ;
- production d'une instruction de commande correspondante en fonction du geste interprété et de l'objet identifié (32, 36) et commande d'un système d'assistance (20) du véhicule automobile (20) selon l'instruction de commande au moyen de l'unité de traitement de données (18) ;
- détection d'un ordre vocal, exprimé avant, pendant ou après la détection du geste, de l'occupant (28) du véhicule au moyen d'une unité de reconnaissance de la parole (16) ;
- interprétation combinée du geste, de l'objet identifié (32, 36) et de l'ordre vocal ainsi que production de l'instruction de commande en fonction de l'interprétation combinée au moyen de l'unité de traitement de données (18) ;
**caractérisé en ce que**
- aussi bien dans le cas d'un geste dirigé vers un objet (36) agencé à l'extérieur du véhicule automobile que dans le cas d'un geste orienté vers un objet (32) agencé à l'intérieur du véhicule automobile, on détecte et interprète celui-ci et on identifie l'objet (32, 36) ;
- on détecte comme geste un mouvement des doigts de l'occupant (28) du véhicule, mouvement au moyen duquel l'objet (32, 36) est montré.

2. Procédé selon la revendication 1, **caractérisé en ce que**, pour identifier l'objet (32, 36), on détermine une position du véhicule automobile ainsi qu'une orientation du véhicule automobile et on identifie ensuite l'objet (32, 36) par l'intermédiaire d'une comparaison avec des informations de cartes numériques.

3. Procédé selon la revendication 1 ou 2, **caractérisé en ce que** l'on n'effectue une détection combinée d'un geste et d'un ordre vocal, détection suivie de la production de l'instruction de commande, que si le geste et l'ordre vocal sont détectés dans les limites d'une durée prédéterminée.

4. Procédé selon l'une des revendications précédentes, **caractérisé en ce que** l'on détecte et identifie un geste dirigé vers un autre véhicule automobile (34) et **en ce que**, en combinaison avec un ordre vocal interprété au moyen duquel un établissement d'une liaison de communication avec un dispositif de communication (40) de l'autre véhicule automobile (34) est demandée, on commande un dispositif de communication (24) du système d'assistance (20) avec une instruction de commande correspondante pour l'établissement de la liaison de communication.

5. Procédé selon l'une des revendications 1 à 4, **caractérisé en ce que** l'on détecte et interprète un geste dirigé vers un objet (36) agencé à l'extérieur du véhicule automobile et **en ce que**, en combinaison avec un ordre vocal interprété comme une demande d'informations, on commande une unité de navigation (22) du système d'assistance (20) avec une instruction de commande correspondante pour fournir des informations sur l'objet (36).

6. Procédé selon l'une des revendications 1 à 4, **caractérisé en ce que** l'on détecte et interprète un geste dirigé vers un objet (36) agencé à l'extérieur du véhicule automobile (10) et **en ce que**, en combinaison avec un ordre vocal identifié comme instruction de navigation, on commande une unité de navigation (22) du système d'assistance (20) avec une instruction de commande correspondante pour déterminer un itinéraire (42) vers l'objet (36).

7. Procédé selon l'une des revendications précédentes, **caractérisé en ce que** l'on souligne un objet (36) agencé à l'extérieur du véhicule automobile (10) dans un affichage tête haute à contact analogique (26) du véhicule automobile (10) dès qu'un geste dirigé vers cet objet (36) est détecté.

8. Système de commande (12) pour faire fonctionner un véhicule automobile (10), avec :
- une unité de détection de geste (14) qui est conçue pour détecter un geste, dirigé vers un objet (32, 36), d'un occupant (28) du véhicule ;
- une unité de traitement de données (18) qui est conçue pour interpréter le geste détecté, pour identifier l'objet (32, 36), pour produire au moins une instruction de commande en fonction du geste interprété et de l'objet identifié et pour commander un système d'assistance (20) du véhicule automobile (10) selon l'instruction de commande ;
- le système de commande (12) comprenant une unité de reconnaissance de la parole (16) qui est conçue pour détecter un ordre vocal, exprimé avant, pendant ou après la détection du geste, de l'occupant (28) du véhicule ;
- l'unité de traitement de données (18) étant conçue pour interpréter le geste, l'objet identifié (32, 36) et l'ordre vocal en combinaison les uns avec les autres et pour produire l'instruction de commande en fonction de l'interprétation combinée ;
**caractérisé en ce que**
- l'unité de détection de geste (14) est conçue pour, aussi bien dans le cas d'un geste dirigé vers un objet (36) agencé à l'extérieur du véhicule automobile que dans le cas d'un geste orienté vers un objet (32) agencé à l'intérieur du véhicule automobile, détecter ce geste, l'unité de traitement de données (18) étant conçue pour interpréter le geste et pour identifier l'objet (36) ;
- l'unité de détection de geste (14) est conçue pour détecter comme geste un mouvement des doigts de l'occupant (28) du véhicule, mouvement au moyen duquel l'objet (32, 36) est montré.

9. Système de commande (12) selon la revendication 8, **caractérisé en ce que** l'unité de détection de geste (14) est conçue pour surveiller exclusivement une zone d'habitacle (30) pouvant être prescrite, du véhicule automobile (10) et pour détecter les gestes de l'occupant de véhicule (28) qui se trouve dans cette zone d'habitacle (30).
